# EUROPEAN PATENT APPLICATION

(11) **EP 4 443 890 A1**
(43) Date of publication of application: **09.10.2024**
(21) Application number: 23461548.2
(22) Date of filing: 05.04.2023
(51) Int. Cl.: H04N 21/433, H04N 21/45, H04N 21/462, H04N 21/472, H04N 21/84

(54) **METHOD OF AGGREGATING DESIRED TV CONTENT FROM THE PROGRAMME STREAMS TRANSMITTED ON INDIVIDUAL CHANNELS**

(71) Applicant: Uniwersytet Zielonogórski, 65-417 Zielona Góra (PL)
(72) Inventor: Paczkowski, Jacek, 67-100 Nowa Sol (PL); Ostrowski, Kacper, 65-533 Zielona Gora (PL); Kramek, Krzysztof, 65-124 Zielona Gora (PL); Mrugalski, Marcin, 65-128 Zielona Gora (PL)
(74) Representative: JD&P Patent Attorneys Joanna Dargiewicz & Partners

(57) **Abstract**

The present invention discloses a method of aggregating desired television content from programme streams transmitted on individual channels, which comprises: (a) the declaration by the user of TV programmes of interest; (b) the selection from the content available on the operator's linear channels of those contents that correspond to the user's declared TV programmes; (c) the registration of the selected contents; (d) the creation of virtual channels with the contents selected in step (b) that correspond to the user's declared TV programmes; wherein the said method is implemented using a TV decoder.

## Description

The present invention relates to a method of aggregating desired television content from programme streams transmitted on individual channels.

Classical television is linear in its delivery of information, programmes are transmitted sequentially and you need to know the scheduled programme on each channel in order to make a choice, change the channel, turn up in front of the TV when the broadcast starts.

This is very inconvenient and frustrating as it forces you to adapt to the TV operator, even though it should be the other way around. This is one of the reasons for the increasing popularity of VoD (Video on Demand) operators such as Netflix and HBO max.

Nevertheless, classic television has not yet said its last word. When signing a contract with an operator, the user receives a set of tens or sometimes hundreds of programmes, of which he usually watches only a few. As a rule, they also do not know the broadcast times of the individual programmes.

There is, however, the option for the user to watch only what they like and when it is convenient for them.

### State of the art

For years, satellite, cable and terrestrial receivers with a built-in recorder function have been known to allow you to record programmes of your choice. The problem is that you have to programme in advance what, when and from where you want to record.

Document US2017230712A1 discloses a method for filtering television content, where the selection criterion can be, for example, the age of the user. Other options include filtering based on the duration of the programme, the position in the rankings, the broadcast time of the programme, the day of the month, the month, etc.

In addition, the document describes a method for combining TV content with content from other sources (e.g. VOD services and other online content sources). The solution does not filter content based on tags identifying individual programmes. It also does not aggregate content in the form of virtual TV channels.

Document US1008S071B2 describes a content aggregation method of breaking original content into chunks (e.g. episodes of series) between which, for example, commercial advertisements can be inserted. This is therefore more a method of tailoring advertising content to users than composing channels with purely entertainment (or documentary etc.) content.

Document WO0139494A1 describes a method for managing content from various sources on the Internet, arranging and formatting it to form virtual channels. In this way, a WEB TV network service is created.

There is a demand in the field for a way to aggregate the desired TV content from the programme streams transmitted in the individual channels so that the user can watch only what they like and when it is convenient for them.

The object of the present invention was to develop a means of selecting (filtering) TV content to match the user's expectations. As a result, the user will watch the content he likes and not watch the others. At the same time, in order to make it easier for the user to enjoy the content prepared in this way, an aggregation is made by creating virtual channels.

This objective has been achieved by a method of aggregating desired TV content according to the invention.

Thus, the subject matter of the present invention is to provide a method of aggregating desired television content from the programme streams transmitted in the individual channels, which comprises: (a) the declaration by the user of TV programmes of interest; (b) the selection from the content available in the operator's linear channels of those contents which correspond to the user's declared TV programmes; (c) the registration of the selected contents; (d) the creation of virtual channels with the contents selected in step (b) which correspond to the user's declared TV programmes; wherein the said method is implemented using a TV decoder (set-top box).

The present inventors therefore propose a solution in which the programmes broadcast by the operator would be accompanied by tags describing each programme: type (film, documentary, series, news programme, etc.), season and episode number. If a film, what type (crime, romance, action, war film, etc.).

The user can declare what films and programmes he or she wishes to watch by defining the type of programme and type of film he or she likes. On this basis, the receiver will automatically record content that matches the user's wishes.

In addition, the receiver will observe which programmes the user watches and which he or she quickly stops watching, and will build a database of information about the user's preferences on this basis. While this is a recommendation system, all information about the user's preferences remains local. The TV operator does not know this information and therefore cannot make money from it or manipulate the user.

The receiver will then record programmes and films that match both the declaration and the observed preferences of the user.

Programmes recorded in this way will fill up the receiver's disc, and viewing them will quickly become as cumbersome as regular TV channels.

To prevent this, the receiver will create virtual TV channels with content that the user likes.

For example, if the user likes news, the receiver will compile news from the TVN24, CNN, BBC and Sky News channels into a virtual channel with selected content from the original channels, e.g. football news, but only if it concerns Robert Lewandowski or the team to which he belongs. Political news but only if it concerns Poland, the European Union and the USA. Entertainment music information but only if it is about Voice of Poland, America's Got Talent etc.

Importantly, news items are often repeated from time to time, the receiver will only show them once. Therefore, the operator should tag them with an identifying tag or signature to prevent repetition. The signature is created on the basis of the content and makes it possible to check whether a programme or news item is a copy of a previously broadcast one. In this way, repetition in virtual channels can be eliminated.

It is important to eliminate all that information which is not of interest to the user and to provide the remaining information in an accessible form.

If the user likes sci-fi films and series, the receiver will create two virtual channels, one with sci-fi films and one with sci-fi series, arranging the episodes of the series in chronological order.

In the same way, other virtual thematic channels can be created to suit the user's taste.

The receiver can automatically create channels for the user, or the user himself can declare the channel names and assign which programmes belong to them.

The operator can offer decoders with the above described functionality to re-engage users with its offer. This will extend the life of classic TV.

Optionally, the receiver can save only the identifiers and tags assigned to programmes instead of saving entire programmes to disk. When the user wishes to view a programme, the receiver will connect to a VoD-like service and show the user the programme of his choice using streaming as in VoD services. The receiver will be cheaper, but the operator will gain information about the user's preferences.

Programmes can be deleted from memory (disk) after they have been viewed, some time after they have been viewed, or when memory (disk) runs out of free space and some of the occupied space needs to be freed up to write new space.

The user can indicate categories of programmes that cannot be automatically deleted. In this way, he can create a library of programmes of interest.

The system described will be very similar to VoD services but will operate on classic TV channels. All the operator has to do is add tags and signatures to the programmes.

There is another feature that should be of interest to both operators and users. Namely, the adverts can also be tagged and the viewer can be made to watch only those that may be of interest to him. For example, the system will not show a man an advert for sanitary napkins and a woman an advert for engine oil. The viewer will weave the adverts that match the user between the programmes they are watching. The effectiveness of a well-tailored ad should be many times higher than an ad aimed at everyone.

This will allow the operator to move from classic linear TV to on-demand TV without major changes to the operator's infrastructure. The operator will be able to advertise to its potential customers: "Our TV is like Netflix, you watch what you want and when you want".

An offer tailored to the user's interests will build stronger customer loyalty to the company. This is because the user will not pay for 160 channels of which he watches 6 and have the feeling of wasted money. Instead, the user will have a few or a dozen virtual channels composed specifically for him and a sense of money well spent.

### Key advantages and features of the present invention

1. The decoder selects from the content available on the operator's linear channels the content that matches the user's declared interests.
2. Selected content is stored on the decoder's disk or list for streaming.
3. The decoder observes what the viewer watches and dislikes and builds a knowledge base of its user's taste.
4. Using this base, the decoder records content not declared by the user but apparently liked by him.
5. The decoder creates virtual channels with content that the user likes.
6. The decoder places recorded content or streaming links in virtual channels.
7. The decoder allows the user to watch any content from any virtual channel at any time.
8. The content in the virtual channels is ordered chronologically and content already viewed is deleted unless otherwise ordered by the user.

The solution according to the present invention is to be embedded in digital television receivers, so called set-top boxes (satellite, cable, terrestrial or Internet), to perform local filtering and content aggregation based on tags added to the content by the television operator. Virtual channels are to be added to classic channels to complement and not replace classic TV channels.

## Claims

1. A method of aggregating desired television content from programme streams transmitted on individual channels, which includes:
(a) declaration by the user of the television programmes of interest;
(b) selection from the content available on the operator's linear channels of those contents which correspond to the television programmes declared by the user;
(c) registration of selected content;
(d) creation of virtual channels with content selected in step (b) that corresponds to the television programmes declared by the user;
wherein the said method is implemented using a television decoder.

2. The method according to claim 1, **characterised in that** in step (c) the selected content is recorded on a disk of a television decoder or on a streaming list.

3. The method according to claim 1 or 2, **characterised in that** in step (a) the declaration by the user of TV programmes of interest is carried out using tags or signatures describing the TV programme in question either broadcast by the TV operator or assigned by the user.

4. The method according to claim 1 or 2 or 3, **characterised in that** the content in the virtual channels is arranged chronologically.

5. The method according to any of claims 1-4, **characterised in that** the content viewed by the user is deleted.

6. The method according to any of claims 1-5, **characterised in that** any content contained in the virtual channels is made available to the user from any virtual channel at any time.
